# EUROPÄISCHE PATENTSCHRIFT

(11) **EP 2 620 820 B1**
(45) Veröffentlichungstag und Bekanntmachung des Hinweises auf die Patenterteilung: **10.02.2021**
(21) Anmeldenummer: 13000269.4
(22) Anmeldetag: 18.01.2013
(51) Int. Cl.: G05B 9/02, G05B 19/042, F15B 13/08, F15B 20/00

(54) **Modulanordnung**
Module assembly
Agencement de module

(30) Priorität: 30.01.2012 DE 102012001615
(43) Veröffentlichungstag der Anmeldung: 31.07.2013
(73) Patentinhaber: PHOENIX CONTACT GmbH & Co. KG, 32825 Blomberg (DE)
(72) Erfinder: Oster, Viktor, 32825 Blomberg (DE); Warneke, Thomas, 37671 Höxter (DE)
(74) Vertreter: Bill, Burkart Hartmut

(56) Entgegenhaltungen:
- EP-A1- 2 026 156
- WO-A1-2007/090427
- JP-A- 2003 139 264
- US-A1- 2009 021 880

## Beschreibung

Die vorliegende Erfindung betrifft eine Modulanordnung mit einer Anzahl von in einer Reihe angeordneten Reihenmodulen für die sichere Automatisierungstechnik.

In der Prozess- und Fertigungsindustrie werden neben den Steuerungs- und Automatisierungsaufgaben zunehmend auch sicherheitsgerichteten Funktionen in eine dezentrale Steuerungsarchitektur aufgenommen. Entsprechende Systeme umfassen eine sichere Steuerung, die über eine Busleitung fehlersicher mit zugeordneten Ein- und Ausgabegeräten (I/O-Geräte) kommunizieren kann. PROFIsafe ist eine Erweiterung des PROFINET-Standards, mit dem Sicherheitsfunktionen frei programmierbar ausgeführt werden können. Die notwendigen sicheren Ein- und Ausgangsdaten können mit diesem Protokoll von und zu den sicheren I/O-Geräten übertragen werden.

Die Anlagen bzw. Maschinenkomponenten arbeiten in der Regel mit elektrischen oder pneumatischen Aktoren bzw. Antrieben, die zum Beispiel von einer zentralen Steuerung kontrolliert werden. Die Ansteuerung der Aktoren erfolgt lokal mit einem I/O-Gerät, das zumindest eine BUS-Anschaltung sowie eine Anzahl von elektrischen, pneumatischen oder hydraulischen Ausgängen besitzt. Anwendungsspezifisch wird stets eine unterschiedliche Anzahl von Ein- und Ausgängen benötigt, so dass es vorteilhaft sein kann, entsprechende I/O-Geräte modular aufzubauen. Ein Modulares I/O-Gerät umfasst beispielsweise ein Kopfmodul mit Schnittstellen für eine Spannungsversorgungseinrichtung und für die Ankopplung an ein BUS-System. Derartige Kopfmodule können bedarfsweise um weitere Module erweitert werden, die beispielsweise die zur Ansteuerung von Aktoren notwendigen elektrischen bzw. pneumatischen Ausgänge bereitstellen. Das Kopfmodul stellt einen internen Gerätebus sowie elektrische Leitungen für eine Spannungsversorgung bereit, die durch eine Anzahl von Modulen durchgeschleift werden können. Die Module bilden zusammengefügt, d.h. mechanisch und elektrisch miteinander verbunden, eine Reihenanordnung. Einzelne Module können daher auch als Reihenmodul (im englischen Inline Module) bezeichnet werden. Der durch die Reihenmodule geschleifte Gerätebus ermöglicht zu dem, dass neben den Ausgangsmodulen auch Steuerungsmodule zur Erweiterung des modularen I/O-Geräts hinzugefügt werden können.

In der sicherheitsgerichteten Automatisierungstechnik bzw. der Sicherheitstechnik ist es notwendig, dass bestimmte Ausgänge in Folge einer Sicherheitsanforderung einen sicheren Zustand einnehmen.

Aus der EP 2 026 156 B1 ist eine Modulanordnung mit einer Anzahl von in einer Reihe angeordneten Modulen bekannt. Ein als Steuermodul bezeichnetes Kopfmodul stellt Steuer- und Sensorleitungen sowie Spannungsversorgungsleitungen bereit, die quer durch alle Module verlaufen. Einige Module sind als Ventilmodule ausgebildet, die pneumatische Ausgänge zum Ansteuern entsprechender Aktoren bereitstellen. Die Ventile werden über die Spannungsversorgungsleitungen mit Energie versorgt und über die Steuerleitungen angesteuert.

Die Modulanordnung besitzt ein Sicherheitsmodul mit einem Schaltmittel, mit dem die Spannungsversorgung für die in der Reihenrichtung der Modulanordnung nachfolgenden Ventilmodule im Falle einer Sicherheitsanforderung unterbrochen werden kann. Die Ventile fallen während einer Sicherheitsanforderung mit Wegfall der Versorgungsspannung in einen definierten Zustand, und zwar unabhängig von dem Zustand ihres Ansteuersignals. Ein jeweiliges Sicherheitsmodul bildet mit einer Anzahl zugeordneter Ventilmodule einen sicheren Abschnitt, der durch ein Trennmodul von einem nachfolgenden sicheren oder nicht sicheren Abschnitt getrennt werden kann.

Die vorliegende Erfindung hat sich die Aufgabe gestellt, eine alternative Modulanordnung mit einer Sicherheitseinrichtung bereitzustellen.

Diese Aufgabe wird durch eine Modulanordnung gemäß den Merkmalen des unabhängigen Anspruchs gelöst. In den Unteransprüchen sind vorteilhafte Weiterbildungen der Modulanordnung angegeben.

Eine erfindungsgemäße Modulanordnung umfasst eine Anzahl von in einer Reihe angeordneten Reihenmodulen, die wenigstens teilweise als Ausgangsmodule zum Ansteuern von Aktoren in der Automatisierungstechnik ausgebildet sind.

Zumindest ein Reihenmodul ist als Sicherheitsmodul ausgebildet, das mit wenigstens einem zugeordneten Ausgangsmodul ein sicheres Segment bildet.

Das Sicherheitsmodul umfasst eine Anzahl schaltbarer Ausgänge zur Ansteuerung einer Anzahl zugeordneter Ausgangsmodule. Ferner umfasst das Sicherheitsmodul wenigstens eine erste Sicherheitsschaltvorrichtung, die ausgebildet ist, auf Ansprechen eines sicheren Steuersignals, wenigstens einen zugeordneten schaltbaren Ausgang abzuschalten.

Die sicheren Segmente der erfindungsgemäßen Modulanordnung werden im Unterschied zur EP 2 026 156 B1 nicht durch eine abgesicherte Versorgungsspannung in den Ausgangsmodulen gebildet, sondern durch eine Abschaltung der sicheren Steuersignale im Sicherheitsmodul. Das Sicherheitsmodul wird durch ein sicheres Telegramm angesteuert, das über den internen Gerätebus der Modulanordnung geleitet wird.

Die Sicherheitsmodule eröffnen jeweils ein neues sicheres Segment, ein Trennmodul von einem nachfolgenden sicheren oder nicht sicheren Abschnitt ist nicht erforderlich.

Die Ausgangsmodule können zumindest teilweise Ventile zum Ansteuern pneumatischer und/oder fluidischer Ausgänge beinhalten.

Alternativ sind die schaltbaren Ausgänge direkt zumindest teilweise über die Ausgangsmodule als elektrische Ausgänge bereitstellbar. Das Sicherheitsmodul kann vorzugsweise eine Diagnoseeinrichtung umfassen, die ausgebildet ist, die Soll- und Ist-Zustände der über die Ausgangsmodule bereitgestellten schaltbaren Ausgänge miteinander zu vergleichen. Diese Funktionalität ist besonders für einen Maschinenschutz vorteilhaft.

Alternativ können die Ausgangsmodule zumindest teilweise elektronische Schaltungen beinhalten, die zum Ansteuern elektrischer Ausgänge geeignet sind.

Besonders vorteilhaft ist, dass in einem sicheren Segment Module mit elektrischen Ausgängen und mit Ventilen in einem gemischten Aufbau realisiert werden können.

Ein erstes Reihenmodul in der Reihenanordnung kann als Kopfmodul ausgebildet sein, das eine
Spannungsversorgungslinie, eine Bezugspotentiallinie und einen Gerätebus zum Durchschleifen durch die weiteren Reihenmodule bereitstellt.

Die sicheren Steuersignale können in einem sicheren Protokoll über den Gerätebus übertragen werden. Das sichere Protokoll kann also durch die Modulanordnung bis zum Sicherheitsmodul getunnelt werden, so dass das Kopfmodul selbst nicht sicherheitsrelevant sein muss. Nur die Segmentscheibe muss sicherheitsrelevant ausgebildet sein.

Die schaltbaren Ausgänge sind vorzugsweise durch eine Schaltvorrichtung ansteuerbar.

Das Sicherheitsmodul kann eine Steuereinrichtung beinhalten, die mit einem durchgeschleiften Gerätebus verbunden und dazu ausgebildet ist, empfangene Ausgangsdaten zusammen mit der Schaltvorrichtung als Signal an den schaltbaren Ausgängen umzusetzen.

Die Schaltvorrichtung kann eine Anzahl von Schaltelementen besitzen, die der Anzahl der schaltbaren Ausgänge entspricht.

Die erste Sicherheitsschaltvorrichtung ist vorzugsweise zwischen einer durch das Sicherheitsmodul durchgeschleiften Spannungsversorgungslinie und der Schaltvorrichtung angeordnet.

Somit können alle schaltbaren Ausgänge gleichzeitig mit einer einzigen Sicherheitsschaltvorrichtung abgeschaltet werden. Eine Sicherheitsanforderung wird als sicheres Abschaltsignal in dem sicheren Sicherheitsmodul bearbeitet.

Alternativ können auch mehrere erste Sicherheitsschaltvorrichtungen in einem Sicherheitsmodul integriert sein, um innerhalb eines sicheren Segmentes einzelne oder Gruppen von schaltbaren Ausgängen für die Ausgangsmodulen abzuschalten.

Optional kann eine zweite Sicherheitsschaltvorrichtung zwischen einer durch das Sicherheitsmodul durchgeschleiften Bezugspotentiallinie und einer Bezugspotentialleitung angeordnet sein. Die Bezugspotentialleitung ist vorzugsweise durch die Ausgangsmodule durchgeschleift, die dem Sicherheitsmodul zugeordnet sind.

Die Erfindung wird nachfolgend anhand von beispielhaften Ausführungsformen unter Bezugnahme der beigefügten Zeichnungen detailliert beschrieben. In den Zeichnungen zeigen:
- Fig. 1: eine Modulanordnung mit zwei sicheren Segmenten,
- Fig. 2: eine erste Ausführung eines sicheren Segmentes mit einem Sicherheitsmodul und Ausgangsmodulen,
- Fig. 3: eine alternative Ausführung eines sicheren Segmentes mit einem Sicherheitsmodul und Ausgangsmodulen.

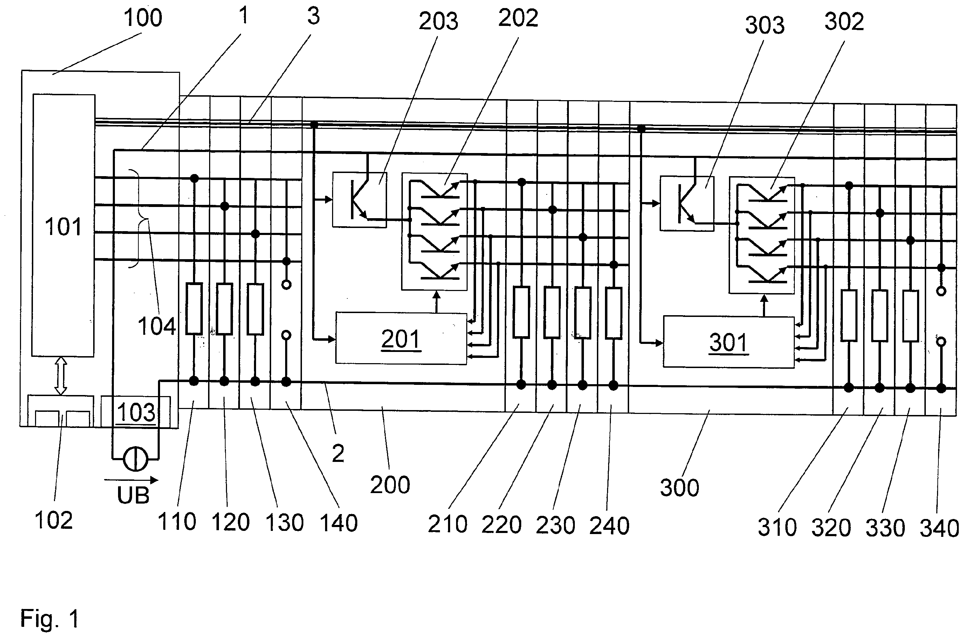

In der Figur 1 ist eine erfindungsgemäße Modulanordnung dargestellt, die eine Anzahl von Ausgangsmodulen 110, 120, 130, 140, 210, 220, 230, 240, 310, 320, 330 und 340 besitzt.

Die Ausgangsmodule 110 bis 130, 210 bis 240 und 310 bis 330 sind beispielhaft zum Ansteuern pneumatischer Aktoren ausgebildet. Ein in den Modulen enthaltenes elektrisch ansteuerbares Ventil ist als Last dargestellt, die zum Beispiel einer Spule eines Magnetventils entspricht. Ein pneumatisches Ausgangsmodul stellt einen Druckluftausgangsanschluss zum Ansteuern eines entsprechenden Aktors bereit, der in der vorliegenden Figur nicht dargestellt ist. Die schaltbare Druckluft kann über einen Eingang bzw. über eine gemeinsame Sammelleitung an oder in der Modulanordnung bereitgestellt werden.

Die Ausgangsmodule 140 und 340 sind beispielhaft ausgebildet, ein elektrisches Ausgangssignal zum Ansteuern entsprechender Aktoren auszugeben. Anstelle des durch die Last dargestellten Magnetventils besitzen die Module 140 und 340 jeweils zwei Ausgangsklemmen, zwischen denen ein externer elektrisch ansteuerbarer Aktor anschließbar ist.

Die Ausgangsmodule 140 und 340 können auch eine elektronische Schaltungseinrichtung umfassen, die einen schaltbaren Ausgang bereitstellen, der auf entsprechende Ausgangsklemmen herausgeführt ist.

Sämtliche Ausgangsmodule können einen pneumatischen bzw. hydraulischen Ventilausgang, eine Ausgangsklemme oder ein elektronisches Ausgangsmodul, je nach dem, welcher Ausgangstyp für eine Automatisierungsaufgabe benötigt wird.

Eine Modulanordnung kann also anwendungsspezifisch aus verschiedenen Modulen zusammengestellt werden, wobei die einzelnen Module als Reihenmodule in einer Reihenrichtung aneinandergereiht werden. Das erste Modul in dieser Reihenrichtung der Anordnung ist als Kopfmodul 100 ausgebildet, an das weitere Reihenmodule in dieser Reihenrichtung, z.B. gemäß Fig. 1 von links nach rechts, angefügt sind. Das Kopfmodul 100 stellt zwei Netzwerkanschlüsse 102 bereit, mit denen das Kopfmodul 100 zum Beispiel mit einem PROFINET Netzwerk eines nicht dargestellten Automatisierungssystems verbunden werden kann. Über einen Versorgungsanschluss 103 wird eine Betriebsspannung UB für die Modulanordnung bereitgestellt.

Das Kopfmodul 100 umfasst eine Steuereinrichtung 101, mit der ein interner Gerätebus 3 an das PROFINET Netzwerk angekoppelt werden kann. Der interne Gerätebus 3 ist zusammen mit einer Spannungsversorgungslinie 1 und einer Bezugspotentiallinie 2 quer durch die gesamte Modulanordnung geführt. Die Busleitungen und die beiden Versorgungsspannungsleitungen werden durch die Reihenmodule durchgeschleift, d.h. sie werden über ein entsprechendes Kontaktsystem z.B. mit Nut- und Federverbindung von Reihenmodul zu Reihenmodul weitergeleitet.

Auf das Kopfmodul 100 folgend sind beispielhaft die vier Ausgangsmodule 110, 120, 130 und 140 angeordnet, deren Ausgänge durch das Kopfmodul 100 gesteuert werden. Die Schaltungseinrichtung 101 ist ausgebildet, PROFINET IO Daten zu verarbeiten und in entsprechende elektrische Signale umzusetzen. Die Ausgangsignale werden über eine Anzahl von schaltbaren Ausgängen 104 von der Schaltungseinrichtung 101 bereitgestellt und über entsprechende Steuerleitungen an die Ausgangsmodule 110, 120, 130 und 140 weitergeleitet. Die Steuerleitungen werden durch die zugeordneten, d.h. benachbarten Ausgangsmodule durchgeschleift.

Auf das letzte vom Kopfmodul 100 ansteuerbare Ausgangsmodul 140 folgt ein erstes Sicherheitsmodul 200, dem eine Anzahl von vier weiteren Ausgangsmodulen 210, 220, 230 und 240 zugeordnet ist. Nach dem Ausgangsmodul 240 ist ein zweites Sicherheitsmodul 300 mit ebenfalls vier Ausgangsmodulen 310, 320 und 340 angeordnet. Die Ausgangsmodule werden jeweils von einer zugeordneten Steuereinrichtung 101, 201 und 301 angesteuert. Über die Anordnung innerhalb der Reihe wird ein Ausgangsmodul jeweils einem Sicherheitsmodul 200 oder 300 bzw. dem Kopfmodul 100 zugeordnet.

In dem dargestellten Beispiel sind jedem der Module 100, 200 und 300 jeweils vier Ausgangsmodule zugeordnet. Je nach Anwendung und je nach verfügbaren schaltbaren Ausgängen kann die Anzahl der zugeordneten Ausgangsmodule variieren.

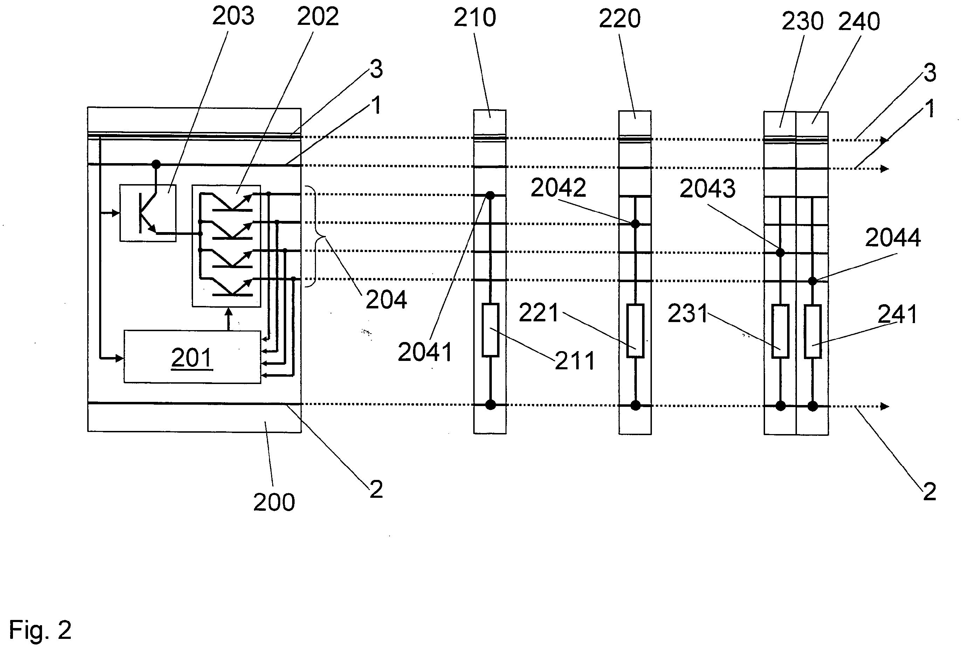

Ein Sicherheitsmodul, z.B. das erste Sicherheitsmodul 200 ist zusammen mit den zugeordneten Ausgangsmodulen 210 bis 240 in der Figur 2 dargestellt.

Das Sicherheitsmodul 200 umfasst interne Busleitungen des durch die Modulanordnung durchgeschleiften Gerätebus 3 sowie eine erste Leitung für die vom Kopfmodul 100 bereitgestellte Spannungsversorgungslinie 1 und eine zweite Leitung für die durchgeschleifte Bezugspotentiallinie 2. Die Steuereinrichtung 201 ist mit dem Gerätebus 3 verbunden und dazu ausgebildet, empfangene Ausgangsdaten zusammen mit der Schaltvorrichtung 202 als Signals an den schaltbaren Ausgängen 204 umzusetzen. Die schaltbaren Ausgänge 204 sind als Ausgangslinie 2041, 2042, 2043 und 2044 durch die Ausgangsmodule 210, 220, 230 und 240 durchgeschleift. Die Ventile bzw. ihre eingangseitigen Spulen 211, 221, 231 und 241 sind jeweils mit einer zugeordneten Ausgangslinie verbunden. Ein Spannungspegel für ein gesetztes Signal der schaltbaren Ausgänge 204 wird über die Schaltvorrichtung 202 aus der Spannungsversorgungslinie 1 bereitgestellt.

Die Ausgangsdaten zur Ansteuerung schaltbarer Ausgänge 204 werden von dem Kopfmodul 100 aus dem PROFINET Netzwerk auf den Gerätebus 3 der Modulanordnung umgesetzt, so dass diese von der Steuereinrichtung 201 empfangen werden können.

Das Sicherheitsmodul 200 umfasst ferner als eine erste Sicherheitsschaltvorrichtung die
Sicherheitsschaltvorrichtung 203, die zwischen der Spannungsversorgungslinie 1 und der Schaltvorrichtung 202 angeordnet ist. Die Sicherheitsschaltvorrichtung 203 enthält ein Schaltelement, mit dem die schaltbaren Ausgänge in Folge einer Sicherheitsanforderung abgeschaltet werden können, in dem die Versorgungsspannung für die Schaltvorrichtung 202 unterbrochen wird.

Alternativ kann jedem der schaltbaren Ausgänge 204 eine separate erste Sicherheitsschaltvorrichtung zugeordnet sein, so dass innerhalb eines Sicherheitsmoduls in Abhängigkeit verschiedener Sicherheitsanforderungen unterschiedliche schaltbare Ausgänge abgeschaltet werden können.

Die Sicherheitsschaltvorrichtung 203 ist mit dem Gerätebus 3 verbunden und dazu ausgebildet, sicherheitsgerichtet Telegramme, die zum Beispiel mit dem PROFIsafe Protokoll über das PROFINET Netzwerk und den Gerätebus 3 übertragen werden, zu empfangen und auszuwerten. Das sichere Protokoll kann durch die Modulanordnung bis zum Sicherheitsmodul 200 durchgetunnelt werden, das mit den ihm zugeordneten Ausgangsmodulen 210 bis 240 ein sicheres Segment bildet.

Das Kopfmodul 100 der erfindungsgemäßen Modulanordnung muss selbst nicht sicherheitsgerichtet ausgeführt sein, um sicherheitsgerichtet Ausgänge innerhalb der gesamten Modulanordnung betreiben zu können. Die sicherheitsgerichtete Steuerung erfolgt erst in einem Sicherheitsmodul eines jeweiligen sicheren Segments. Grundsätzlich kann eine Sicherheitssteuerung aber auch in dem Kopfmodul 100 integriert sein.

Neben der Sicherheitsschaltvorrichtung 203 kann auch die Steuereinrichtung 201 des Sicherheitsmoduls 200 zur Verarbeitung sicherheitsgerichteter PPROFIsafe Telegramme ausgebildet sein, so dass die einzelnen schaltbaren Ausgänge 204 zusätzlich mit der Schaltvorrichtung 202 in Folge einer Sicherheitsanforderung abschaltbar sind. Durch den zweifachen Abschaltweg kann die Sicherheitsintegrität bei einer Sicherheitsanforderung erhöht werden, ohne dass eine zusätzliche Hardware erforderlich wird. Das Schaltelement in der Sicherheitsschaltvorrichtung 203 kann als invertierender Ausgang realisiert werden, während die schaltbaren Ausgänge mit einem nichtinvertierenden Signal die Ventile schalten. Somit wäre auch eine Diversität realisierbar, ohne dass zusätzlich ein zweiter Abschaltweg realisiert werden müsste.

Grundsätzlich besteht die Möglichkeit jedem schaltbaren Ausgang eine eigene Sicherheitsschaltvorrichtung zuzuordnen.

Das Sicherheitsmodul 200 ermöglicht eine Überwachung der schaltbaren Ausgänge 204, in dem die Ausgangssignale von der Schaltvorrichtung 202 zurück gelesen werden. Wird ein schaltbarer Ausgang zur Ansteuerung eines externen elektrischen Aktors verwendet, so kann der Soll-Zustand des schaltbaren Ausgangs mit dem Ist-Zustand des Rücklesesignals verglichen werden. Bei einer Abweichung kann der Ausgang über die zugeordnete Sicherheitsschaltvorrichtung 203 abgeschaltet werden bzw. eine Sicherheitsanforderung ausgelöst werden.

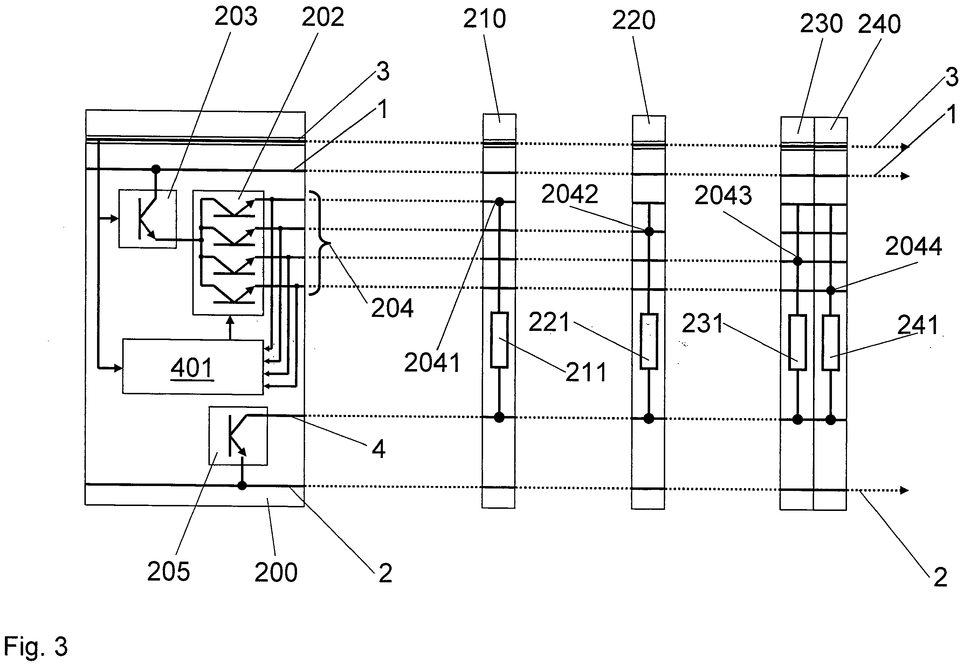

In der Figur 3 ist ein zu dem in Bezugnahme auf Fig. 2 beschriebenen Sicherheitsmodul alternatives Sicherheitsmodul dargestellt, wobei gleiche oder gleichwirkende Komponenten mit den selben Bezugszeichen belegt sind. Das Sicherheitsmodul gemäß Fig. 3 umfasst folglich wiederum vier Ausgangsmodule 210 bis 240 dargestellt. Das Sicherheitsmodul gemäß Fig. 3 besitzt zweckmäßig wiederum eine erste Sicherheitsschaltvorrichtung 203. In optionaler Ausführung besitzt das Sicherheitsmodul gemäß Fig. 3 jedoch eine zweite
Sicherheitsschaltvorrichtung 205, wobei die zweite Sicherheitsschaltvorrichtung 205 ausgebildet ist, das Bezugspotential für die nachfolgenden Ausgangsmodule 210 bis 240 in Folge eine Sicherheitsanforderung abzuschalten.

Die zweite Sicherheitsschaltvorrichtung 205 ist zwischen der Leitung der Bezugspotentiallinie 2 und einem Bezugspotentialanschluss 4 angeordnet, der parallel zu der Bezugspotentiallinie 2 durch die Ausgangsmodule geschleift ist. Die wiederum als Last 211, 221, 231 und 241 dargestellten Schaltelemente sind mit dem Bezugspotentialanschluss 4 elektrisch verbunden, der in Folge einer Sicherheitsanforderung abschaltbar ist.

## Patentansprüche

1. Modulanordnung mit einer Anzahl von in einer Reihe angeordneten Reihenmodulen, die wenigstens teilweise als Ausgangsmodule zum Ansteuern von Aktoren in der Automatisierungstechnik ausgebildet sind,
wobei ein erstes Reihenmodul in der Reihenanordnung als Kopfmodul (100) ausgebildet ist, das eine Spannungsversorgungslinie (1), eine Bezugspotentiallinie (2) und einen Gerätebus (3),zum Durchschleifen durch die weiteren Reihenmodule bereitstellt,
wobei der interne Gerätebus (3) zusammen mit der Spannungsversorgungslinie (1) und der Bezugspotentiallinie (2) quer durch die gesamte Modulanordnung geführt ist,
wobei zumindest ein Reihenmodul als Sicherheitsmodul (200) ausgebildet ist, das mit wenigstens zwei zugeordneten Ausgangsmodulen (210, 220, 230, 240) ein sicheres Segment bildet, wobei das Sicherheitsmodul (200) eine Anzahl schaltbarer Ausgänge (204) zur Ansteuerung einer Anzahl zugeordneter Ausgangsmodule (210, 220, 230, 240) und wenigstens eine erste und eine zweite Sicherheitsschaltvorrichtung (203, 205) umfasst, wobei die erste Sicherheitsschaltvorrichtung (203) mit dem durchgeschleiften Gerätebus (3) verbunden und ausgebildet ist, auf Ansprechen eines sicheren Steuersignals, wenigstens zwei zugeordnete schaltbare Ausgänge abzuschalten
wobei die zweite Sicherheitsschaltvorrichtung (205) zwischen der durch das Sicherheitsmodul (200) durchgeschleiften Bezugspotentiallinie (2) und einem Bezugspotentialanschluss (4) angeordnet ist, wobei der Bezugspotentialanschluss (4) durch die Ausgangsmodule durchgeschleift ist, die dem Sicherheitsmodul (200) zugeordnet sind
wobei die zweite Sicherheitsschaltvorrichtung (205) ausgebildet ist, das Bezugspotential für die dem Sicherheitsmodul (200) zugeordneten Ausgangsmodule (210, 220, 230, 240) in Folge einer Sicherheitsanforderung abzuschalten.

2. Modulanordnung gemäß vorstehendem Anspruch 1, **dadurch gekennzeichnet, dass** die Ausgangsmodule zumindest teilweise Ventile zum Ansteuern pneumatischer und/oder hydraulischer Ausgänge beinhalten.

3. Modulanordnung gemäß einem der vorstehenden Ansprüche, **dadurch gekennzeichnet, dass** die schaltbaren Ausgänge zumindest teilweise über die Ausgangsmodule als elektrische Ausgänge bereitstellbar sind.

4. Modulanordnung gemäß vorstehendem Anspruch 3, **dadurch gekennzeichnet, dass** die Ausgangsmodule zumindest teilweise elektronische Schaltungen zum Ansteuern der elektrischen Ausgänge beinhalten.

5. Modulanordnung gemäß vorstehendem Anspruch 4, **dadurch gekennzeichnet, dass** das Sicherheitsmodul eine Diagnoseeinrichtung umfasst, die ausgebildet ist, die Soll- und Ist-Zustände der über die Ausgangsmodule bereitgestellten schaltbaren Ausgänge (204) miteinander zu vergleichen.

6. Modulanordnung gemäß einem der vorstehenden Ansprüche, **dadurch gekennzeichnet, dass** die schaltbaren Ausgänge (204) durch eine Schaltvorrichtung (202) ansteuerbar sind.

7. Modulanordnung gemäß vorstehendem Anspruch 6, **dadurch gekennzeichnet, dass** das Sicherheitsmodul (200) eine Steuereinrichtung (201) beinhaltet, die mit dem durchgeschleiften Gerätebus (3) verbunden und dazu ausgebildet ist, empfangene Ausgangsdaten zusammen mit der Schaltvorrichtung (202) als Signal an den schaltbaren Ausgängen (204) umzusetzen.

8. Modulanordnung gemäß vorstehendem Anspruch 7, **dadurch gekennzeichnet, dass** die Schaltvorrichtung (202) eine Anzahl von Schaltelementen besitzt, die der Anzahl der schaltbaren Ausgänge (204) entspricht.

9. Modulanordnung gemäß einem der vorstehenden Ansprüche, **dadurch gekennzeichnet, dass** die erste Sicherheitsschaltvorrichtung (203) zwischen einer durch das Sicherheitsmodul (200) durchgeschleiften Spannungsversorgungslinie (1) und der Schaltvorrichtung (202) angeordnet ist.

## Claims

1. A module assembly, comprising a number of inline modules arranged in a row, which are at least in part configured as output modules for controlling actuators in automation technology; wherein a first inline module in the inline assembly is configured as a header module (100) which provides a voltage supply line (1), a reference potential line (2) and a device bus (3) for looping through the other inline modules;
wherein the internal device bus (3) together with the voltage supply line (1) and the reference potential line (2) is routed across the entire module assembly;
wherein at least one inline module is configured as a safety module (200) which forms a safe segment with at least two associated output modules (210, 220, 230, 240), wherein the safety module (200) has a number of switchable outputs (204) for controlling a number of associated output modules (210, 220, 230, 240), and at least a first and a second safety switching device (203, 205), wherein the first safety switching device (203) is connected to the looped-through device bus (3) and is configured to be responsive to a safe control signal by switching off at least two associated switchable outputs;
wherein the second safety switching device (205) is arranged between the reference potential line (2) looped through the safety module (200) and a reference potential connection (4), wherein the reference potential connection (4) is looped through the output modules associated with the safety module (200);
wherein the second safety switching device (205) is configured to switch off the reference potential for the output modules (210, 220, 230, 240) associated with the safety module (200) in response to a safety request.

2. The module assembly according to the preceding claim 1, **characterized in that** at least part of the output modules include valves for controlling pneumatic and/or hydraulic outputs.

3. The module assembly according to any one of the preceding claims, **characterized in that** the switchable outputs can at least partially be provided as electrical outputs, via the output modules.

4. The module assembly according to the preceding claim 3, **characterized in that** at least part of the output modules include electronic circuits for controlling the electrical outputs.

5. The module assembly according to the preceding claim 4, **characterized in that** the safety module comprises a diagnostic device which is adapted to compare with each other the target and actual states of the switchable outputs (204) provided via the output modules.

6. The module assembly according to any one of the preceding claims, **characterized in that** the switchable outputs (204) are controllable by a switching device (202).

7. The module assembly according to the preceding claim 6, **characterized in that** the safety module (200) includes a control device (201) which is connected to the looped-through device bus (3) and is configured, together with the switching device (202), to transfer received output data as a signal at the switchable outputs (204).

8. The module assembly according to the preceding claim 7, **characterized in that** the switching device (202) has a number of switching elements which corresponds to the number of switchable outputs (204).

9. The module assembly according to any one of the preceding claims, **characterized in that** the first safety switching device (203) is arranged between a voltage supply line (1) looped through the safety module (200) and the switching device (202).

## Revendications

1. Agencement modulaire avec un certain nombre de modules en série agencés en série qui sont conçus au moins partiellement en tant que modules de sortie pour commander des actionneurs dans la technique de l'automatisation,
dans lequel un premier module en série est conçu dans l'agencement modulaire en tant que module de tête (100) qui fournit une ligne d'alimentation en tension (1), une ligne de potentiel de référence (2) et un bus d'appareil (3), pour un bouclage par les autres modules en série,
dans lequel le bus d'appareil (3) interne est guidé ensemble avec la ligne d'alimentation en tension (1) et la ligne de potentiel de référence (2) à travers l'ensemble de l'agencement modulaire,
dans lequel au moins un module en série est conçu en tant que module de sécurité (200) qui, avec au moins deux modules de sortie (210, 220, 230, 240) attribués, forme un segment sûr, où le module de sécurité (200) comprend un certain nombre de sorties (204) commutables pour commander un certain nombre de modules de sortie (210, 220, 230, 240) attribués et au moins un premier et un second dispositif de commutation de sécurité (203, 205), où le premier dispositif de commutation de sécurité (203) est relié et conçu avec le bus d'appareil (3) bouclé pour, en réponse à un signal de commande sûr, éteindre au moins deux sorties commutables attribuées,
dans lequel le second dispositif de commutation de sécurité (205) est agencé entre la ligne de potentiel de référence (2) bouclée par le module de sécurité (200) et une borne de potentiel de référence (4), où la borne de potentiel de référence (4) est bouclée par les modules de sortie qui sont attribués au module de sécurité (200)
dans lequel le second dispositif de commutation de sécurité (205) est conçu pour éteindre le potentiel de référence pour les modules de sortie (210, 220, 230, 240) attribués au module de sécurité (200) à la suite d'une exigence de sécurité.

2. Agencement modulaire selon la revendication 1 précédente, **caractérisé en ce que** les modules de sortie comportent au moins partiellement des soupapes pour commander des sorties pneumatiques et/ou hydrauliques.

3. Agencement modulaire selon l'une des revendications précédentes, **caractérisé en ce que** les sorties commutables peuvent être fournies en tant que sorties électriques au moins partiellement via les modules de sortie.

4. Agencement modulaire selon la revendication 3 précédente, **caractérisé en ce que** les modules de sortie comportent au moins partiellement des commutateurs électroniques pour commander des sorties électriques.

5. Agencement modulaire selon la revendication 4 précédente, **caractérisé en ce que** le module de sécurité comprend un équipement de diagnostic qui est conçu pour comparer entre eux les états de consigne et les états réels des sorties (204) commutables fournies via les modules de sortie.

6. Agencement modulaire selon l'une des revendications précédentes, **caractérisé en ce que** les sorties (204) commutables peuvent être commandées par un dispositif de commutation (202).

7. Agencement modulaire selon la revendication 6 précédente, **caractérisé en ce que** le module de sécurité (200) comporte un équipement de commande (201) qui est relié au bus d'appareil (3) bouclé et conçu pour convertir des données de sortie reçues, ensemble avec le dispositif de commutation (202), en signal à destination des sorties (204) commutables.

8. Agencement modulaire selon la revendication 7 précédente, **caractérisé en ce que** le dispositif de commutation (202) possède un certain nombre d'éléments de commutation qui correspond au nombre des sorties (204) commutables.

9. Agencement modulaire selon l'une des revendications précédentes, **caractérisé en ce que** le premier dispositif de commutation de sécurité (203) est agencé entre une ligne d'alimentation en tension (1) bouclée par le module de sécurité (200) et le dispositif de commutation (202).
